# EUROPÄISCHE PATENTSCHRIFT

(11) **EP 0 619 197 B1**
(45) Veröffentlichungstag und Bekanntmachung des Hinweises auf die Patenterteilung: **09.04.1997**
(21) Anmeldenummer: 94105203.7
(22) Anmeldetag: 31.03.1994
(51) Int. Cl.: B60H 1/22

(54) **Motorunabhängiges Fahrzeugheizgerät**
Engine independent vehicle heating system
Appareil de chauffage pour véhicule, indépendant du moteur

(30) Priorität: 03.04.1993 DE 4311080
(43) Veröffentlichungstag der Anmeldung: 12.10.1994
(73) Patentinhaber: WEBASTO THERMOSYSTEME GmbH, D-82131 Stockdorf (DE)
(72) Erfinder: Appel, Josef, D-82131 Gauting (DE)
(74) Vertreter: Wiese, Gerhard

(56) Entgegenhaltungen:
- DE-A- 3 209 904
- DE-A- 3 609 098
- DE-A- 3 730 121
- DE-A- 3 815 786
- DE-C- 4 140 804

## Beschreibung

Die Erfindung betrifft ein motorunabhängiges Fahrzeugheizgerät gemäß dem Oberbegriff des Patentanspruchs 1. Ein gattungsgemäßes Fahrzeugheizgerät ist aus der DE 32 09 904 A1 bekannt. Neben einer als Einrichtung zur dosierten Zufuhr von Brennstoff dienenden Brennstoffpumpe Weist jenes Heizgerät auch ein mittels eines Elektromotors angetriebenes Brennluft-Gebläse auf, an dem eine verstellbare Bypaß-Schraube als Einrichtung zur Veränderung der Brennluftmenge dient. Derartige Einstellschrauben werden bei Brennluft-Gebläsen dazu verwendet, fertigungsbedingte Toleranzen an den an der Verbrennung beteiligten Aggregaten auszugleichen und das Brennstoff-Luftverhältnis für die Erreichung der gesetzlich vorgeschriebenen Grenzwerte, beispielsweise für den CO₂-Gehalt im Abgas zu korrigieren. Eine solche mechanische Einstellung eines Korrekturwertes für das Brennstoff-Luftverhältnis ist zum einen umständlich und zum anderen aufgrund der zur Überwindung der Selbsthemmung der Einstellschraube aufzubringenden Stellkraft in der Regel nicht sehr exakt.

Der Erfindung liegt die Aufgabe zugrunde, eine vereinfachte Einstell-und Korrekturmöglichkeit für ein Brennstoff-Luftverhältnis eines Fahrzeugheizgerätes zu schaffen.

Diese Aufgabe wird erfindungsgemäß durch die Merkmale im kennzeichnenden Teil des Patentanspruchs 1 gelöst. Bei dieser Lösung wird dem Steuergerät über wenigstens einen Eingang ein Korrekturwert zugeführt, der im Datenspeicher des Steuergerätes gespeichert wird und Ausgangssignale desselben an die Einrichtung zur Brennstoffzufuhr und/oder an das Brennluft-Gebläse verändert, die deren Drehzahl bzw. Taktfrequenz bestimmen. Bei der erfindungsgemäßen Lösung wird somit ein in modernen Fahrzeugheizgeräten ohnehin vorhandenes elektronisches Steuergerät dazu verwendet, einen sich aus den Fertigungstoleranzen eines bestimmten Heizgerätes ergebenden einmal gemessenen Korrekturwert in einen Speicher zu übernehmen und anschließend ständig im Steuerablaufprogramm zu berücksichtigen. Somit wird eine Korrektur des Brennstoff-Luftverhältnisses unter Wegfall aller mechanischen Einstelleinrichtung ermöglicht, die keinen zusätzlichen baulichen Aufwand erfordert.

In einer vorteilhaften Ausgestaltung der Erfindung wird der Korrekturwert über eine serielle Schnittstelle in den entsprechenden Datenspeicher eingelesen. Diese Art der Übermittlung eines Korrekturwertes an ein Steuergerät ist insbesondere für die werksseitige Ersteinstellung geeignet. Dabei kann beispielsweise in einer End-of-Line (EOL)-Programmierung, wie sie aus der DE 41 40 804 C1 prizipiell bekannt ist, der entsprechende Korrekturwert als ein gerätespezifischer Parameter mit den übrigen für die Steuerung des Heizgerätes erforderlichen Programmteilen und Daten mit übertragen werden.

In einer alternativen oder zusätzlichen Ausgestaltung ist vorgesehen, daß der Korrekturwert mittels eines Potentiometers einstellbar ist, wobei dessen einstellbarer analoger Strom- bzw. Spannungswert mittels eines Analog/Digital-Wandlers erfaßt und in den Datenspeicher eingelesen wird. Da moderne Mikroprozessoren, die für Steuerungszwecke verwendet werden, in aller Regel auch zumindestens ein A/D-Wandlerteil umfassen, ist auch bei dieser Lösung abgesehen von dem einstellbaren Potentiometer kein zusätzlicher Bauaufwand erforderlich.

Ein solches Potentiometer wird vorzugsweise auf einer Platine des Steuergeräts angeordnet, die in einer besonders vorteilhaften Ausführungsform direkt unterhalb eines am Gehäuse abnehmbar angeordneten Deckels liegt. Eine Korrektur ist somit in einfacher Weise auch für eine Einbauwerkstatt oder einen fachkundigen Endabnehmer bei sich während des laufenden Betriebes aufgrund von Abnutzungserscheinungen ergebenden verschlechterten Brennwerten möglich.

Für die Eingabe des Korrekturwertes mittels einer seriellen Schnittstelle ist bei Verwendung eines Steuergerätes, wie es prinzipiell aus der bereits oben erwähnten DE 41 40 804 C1 bekannt ist, ebenfalls kein zusätzlicher baulicher Aufwand erforderlich, da die serielle Schnittstelle dort bereits sowohl für das Eingeben von Daten wie für das Auslesen von Betriebsparametern mittels eines Diagnosegerätes ohnehin vorhanden ist. Bei einer solchen Anordnung ist es in weiterer Ausgestaltung vorteilhaft, wenn die Eingabe des Korrekturwertes mittels eines vorzugsweise tragbaren Diagnosegeräts erfolgt.

Schließlich ist es für ein in mehreren Laststufen betreibbares Fahrzeugheizgerät vorteilhaft, daß der Datenspeicher spezifische Korrekturwerte für jede der Laststufen speichert. Dadurch wird bei den in der Praxis nicht linearen Kennlinien einer Brennstoffpumpe oder eines Brennluftgebläses dem Umstand Rechnung getragen, daß die fertigungsbedingten Toleranzen an verschiedenen Lastpunkten auch verschiedene Korrekturwerte erfordern. Bei einem in einem bestimmten Leistungsbereich stufenlos regelbaren Heizgerät kann dies durch Auslesen eines Korrekturwertes aus einem gespeicherten Kennfeld entsprechend berücksichtigt werden.

Nachfolgend ist ein Ausführungsbeispiel der Erfindung anhand der Zeichnung beschrieben. Es zeigt:
- Fig. 1: einen Längsschitt durch ein Fahrzeugheizgerät,
- Fig. 2: eine Draufsicht auf das Fahrzeugheizgerät gemäß Fig. 1 nach Abnahme des oberen Gehäuseteils und
- Fig. 3: eine schematische Darstellung des Steuergeräts.

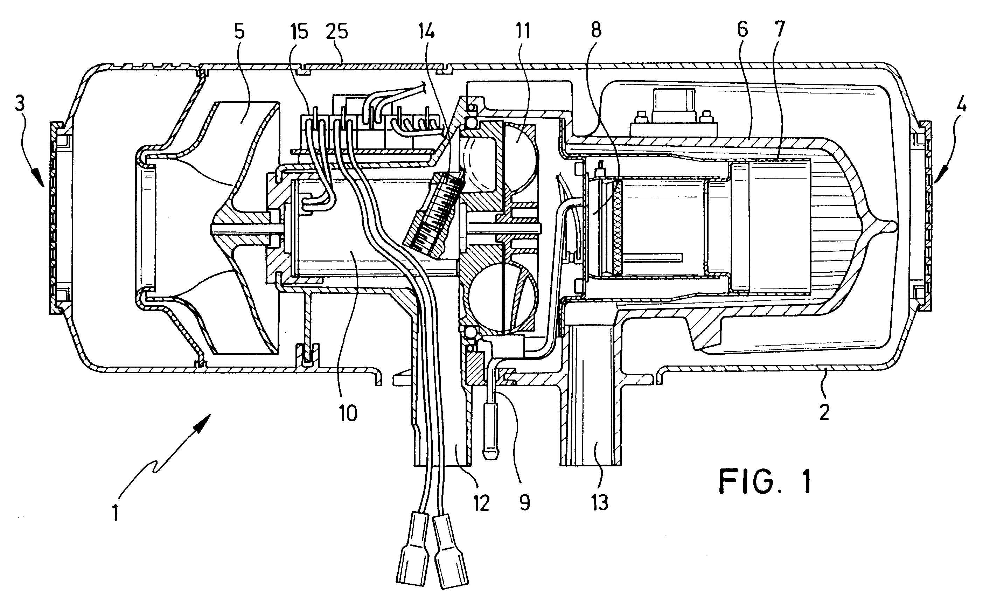

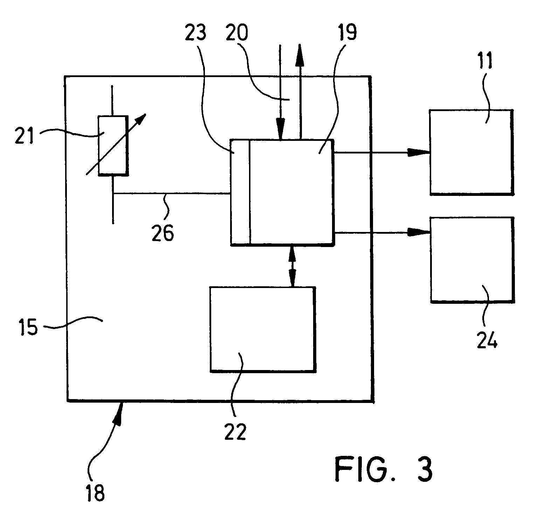

Ein in Fig. 1 insgesamt mit 1 bezeichnetes Fahrzeugheizgerät ist im vorliegenden Beispiel als Luftheizgerät dargestellt. Für die vorliegende Erfindung sind jedoch ebensogut Fahrzeugheizgeräte geeignet, die in den Kühlwasserkreislauf eines Fahrzeugs eingeschaltet sind. Das Fahrzeugheizgerät 1 umfaßt ein Gehäuse 2 mit zwei stirnseitigen Öffnungen an einer Eintrittsseite 3 und einer Austrittsseite 4. Innerhalb des Gehäuses 2 wird von der Eintrittsseite 3 zur Austrittsseite 4 mittels eines Heizluftgebläses 5 Heizluft über einen Wärmetauscher 6 zur Erwärmung eines nicht dargestellten Fahrzeuginnenraumes gefördert. Die zur Erwärmung des Wärmetauschers 6 erforderliche Energie wird den von einem Brenner 8 in einer anschließenden Brennkammer 7 erzeugten heißen Brenngasen entzogen. Dem Brenner 8 wird Brennstoff von einer nur in Fig. 3 schematisch dargestellten Brennstoffpumpe 24 über eine Brennstoffleitung 9 sowie Brennluft mittels eines Gebläses 11 zugeführt. Das dabei entstehende Brennstoff-Luftgemisch wird mittels einer nicht näher dargestellten Zündeinrichtung gezündet und die entstehenden heißen Abgase verlassen nach Erwärmen des Wärmetauschers 6 über einen Abgasstutzen 13 das Heizgerät 1. Die vom Brennluft-Gebläse 11 geförderte Brennluft wird über einen Ansaugstutzen 12 angesaugt.

Zur Verdeutlichung der bei herkömmlichen Heizgeräten verwendeten Einstellung der Förderleistung des Brennluft-Gebläses 11 wurde in Fig. 1 eine Bypaß-Schraube 14 eingezeichnet, die einen die Druckseite mit der Saugseite des Gebläses 11 verbindenden Bypaßkanal durch Verstellen mehr oder weniger freigibt bzw. sperrt. Eine solche Bypaß-Schraube 14 wird in einem erfindungsgemäßen Heizgerät entgegen der Darstellung in Fig. 1 nicht benötigt. Das Brennluft-Gebläse 11 und das Heizluftgebläse 5 werden mittels eines Elektromotors 10 angetrieben. Die Drehzahl dieses Elektromotors 10 ist durch ein Steuergerät 18 steuerbar. Ebenso ist auch die Drehzahl der Brennstoffpumpe 24 mittels des Steuergerätes 18 einstellbar; bei Verwendung einer Magnetpumpe gilt dieses in gleicher Weise für die Taktfrequenz.

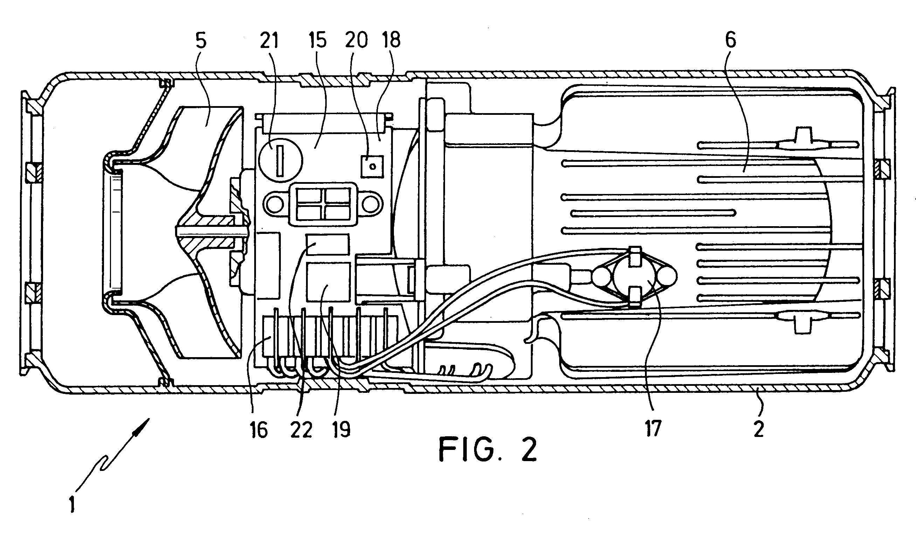

Die für die Steuerung des Heizgerätes erforderlichen Bauteile sind im Steuergerät 18 auf einer Platine 15 zusammengefaßt. Das Steuergerät 18 umfaßt einen Mikroprozessor 19, in den ein Analog/Digital-Wandlerteil 23 integriert ist. Diesem Analog/Digital-Wandlerteil 23 wird ein Spannungssignal eines verstellbaren Potentiometers 21 über einen Eingang 26 zugeführt. Der Mikroprozessor 19 ist ferner mittels einer seriellen Schnittstelle 20 für eine Ein- und Ausgabe von Daten und Programmen mit Peripheriegeräten verbindbar. Der Mikroprozessor 19 ist ferner mit einem Datenspeicher 22 verbunden, in den Daten hineingeschrieben und aus dem Daten ausgelesen werden können. Der Datenspeicher 22 ist als nicht flüchtiger Speicher ausgebildet, d.h. die darin gespeicherten Daten bleiben auch bei Abschalten der Versorgungsspannung erhalten. Der Mikroprozessor 19 steuert über zwei Ausgänge die Drehzahl des Gebläses 11 und die Drehzahl bzw. die Taktfrequenz der Brennstoffpumpe 24. Aus Vereinfachungsgründen wurden in Fig. 3 alle weiteren Ein-und Ausgänge des Steuergerätes 18 weggelassen, die zwar für die Funktion des Heizgerätes insgesamt erforderlich sind, jedoch für die vorliegende Erfindung keine Rolle spielen. Als Beispiel dafür sei die in Fig. 2 gezeigte Verbindung eines Temperaturwächters 17 mittels Kabeln und einer Steckerleiste 16 mit der Platine 15 angeführt.

Um eine nachträgliche Korrektur eines für das Brennstoff-Luftverhältnis relevanten Parameters, wie Drehzahl des Gebläses 11 oder der Brennstoffpumpe 24 leicht vornehmen zu können, ist am Gehäuse 2 ein in Fig. 1 angedeuteter Deckel 25 vorgesehen, nach dessen Abnehmen das Potentiometer 21 frei zugänglich ist.

Nachstehend soll die Funktion des Heizgerätes 1 erklärt werden. Nachdem das Fahrzeugheizgerät 1 im Werk fertig montiert wurde und das Steuergerät 18 über die serielle Schnittstelle 20 mit den für das betreffende Heizgerät relevanten Programmteilen und Daten versorgt wurde, wird aufgrund eines Abnahmeprüfprotokolls ein für ein bestimmtes Fahrzeugheizgerät aufgrund unvermeidbarer Fertigungstoleranzen charakteristischer Korrekturwert bei einer End-of-Line Programmierung des Steuergerätes 18 diesen Daten mit hinzugefügt oder in einer Variante über eine Einstellung des Potentiometers 21 vorgenommen. Bei einer Einstellung über das Potentiometer 21 wird der vom A/D-Wandler 23 ermittelte analoge Eingangswert vom Potentiometer 21 in einen digitalen Wert gewandelt, im Mikroprozessor 19 gemäß einer dort gespeicherten Routine aufbereitet und anschließend in den Speicher 22 übertragen. In gleicher Weise werden über die serielle Schnittstelle 20 übertragene digitale Werte vom Mikroprozessor 19 in den Datenspeicher 22 übertragen. Beim Betrieb des Fahrzeugheizgerätes 1 wird ein derartiger Korrekturwert entweder ersatzweise zu einem bei der Programmierung übermittelten Standardwert, beispielsweise für die Gebläsedrehzahl des Gebläses 11 oder als ein zu einem solchen Standardwert zu addierender Korrekturwert ständig berücksichtigt. Aufgrund des für sich allein oder in Addition mit einem Standardwert sich ergebenden wirksamen Korrekturwert gibt das Steuergerät 18 über den Mikroprozessor 19 korrigierte Werte für die Gebläsedrehzahl des Gebläses 11 und/oder für die Drehzahl oder Taktfrequenz der Brennstoffpumpe 24 aus. Sollte sich bei einer Überprüfung des Heizgerätes ein vom vorgeschriebenen Wert abweichender Wert für den CO₂-Gehalt des Abgases ergeben, so kann entweder von der Werkstatt mittels eines tragbaren Diagnosegerätes über die serielle Schnittstelle 20 eine Korrektur dieser Drehzahlwerte vorgenommen werden oder es erfolgt über das verstellbare Potentiometer 21 manuell eine Korrektur dieser Werte.

Unabhängig von der gewählten Korrekturvariante kann auf eine mechanische Bypaß-Schraube 14 zur Korrektur des Brennstoff-Luftverhältnisses verzichtet werden, wodurch das Gehäuse des Gebläses 11 konstruktiv vereinfacht, leichter und billiger wird.

Bei einem Fahrzeugheizgerät, das in mehreren Laststufen betreibbar ist, werden für jede Laststufe spezifische Korrekturwerte bei der Endabnahme am Prüfstand ermittelt und in der vorstehend beschriebenen Weise über den Mikroprozessor 19 im Datenspeicher 22 abgelegt. Während mittels einer mechanischen Bypaß-Schraube nur ein Korrekturwert für das Brennstoff-Luftverhältnis in allen möglichen Laststufen einstellbar ist, kann durch die gemäß der Erfindung elektronisch erfolgende Korrektur für jeden Betriebszustand ein passender, zulässige Abgaswerte garantierender Korrekturwert eingegeben werden.

## Patentansprüche

1. Motorunabhängiges Fahrzeugheizgerät (1) mit einer Einrichtung (24) zur dosierten Zufuhr von Brennstoff zu einem Brenner (8), dem mittels eines durch einen Elektromotor (10) angetriebenen Gebläses (11) Brennluft zugeführt wird, mit einer Einrichtung (14; 21) zur Veränderung der Brennluft- und/oder der Brennstoffmenge sowie mit einem einen nichtflüchtigen Datenspeicher (22) und einen Mikroprozessor (19) umfassenden Steuergerät (18), **dadurch gekennzeichnet**, daß dem Steuergerät (18) über wenigstens einen Eingang (26; 20) ein Korrekturwert zuführbar ist, der im Datenspeicher (22) gespeichert wird und Ausgangssignale des Steuergeräts (18) an die Einrichtung (24) zur Brennstoffzufuhr und/oder an das Brennluft-Gebläse (11) verändert, die deren Drehzahl bzw. Taktfrequenz bestimmen.

2. Motorunabhängiges Fahrzeugheizgerät (1) nach Anspruch 1, **dadurch gekennzeichnet**, daß der Korrekturwert über eine serielle Schnittstelle (20) in den Datenspeicher (22) eingelesen wird.

3. Motorunabhängiges Fahrzeugheizgerät (1) nach einem der vorhergehenden Ansprüche, **dadurch gekennzeichnet**, daß der Korrekturwert mittels eines Potentiometers (21) einstellbar ist, mittels eines Analog/Digital-Wandlers (23) erfaßt und in den Datenspeicher (22) eingelesen wird.

4. Motorunabhängiges Fahrzeugheizgerät (1) nach Anspruch 3, **dadurch gekennzeichnet**, daß der Analog/Digital-Wandler (23) im Mikroprozessor (19) integriert ist.

5. Motorunabhängiges Fahrzeugheizgerät (1) nach Anspruch 3 oder 4, **dadurch gekennzeichnet**, daß das Potentiometer (21) auf einer Platine (15) des Steuergeräts (18) angeordnet ist.

6. Motorunabhängiges Fahrzeugheizgerät (1) nach Anspruch 2, **dadurch gekennzeichnet**, daß die serielle Schnittstelle (20) für das Auslesen von Betriebsparametern mittels eines Diagnosegeräts verwendbar ist.

7. Motorunabhängiges Fahrzeugheizgerät (1) nach Anspruch 6, **dadurch gekennzeichnet**, daß die Eingabe des Korrekturwerts mittels des Diagnosegeräts erfolgt.

8. Motorunabhängiges Fahrzeugheizgerät (1) nach einem der vorhergehenden Ansprüche, das in mehreren Laststufen betreibbar ist, **dadurch gekennzeichnet**, daß der Datenspeicher (22) spezifische Korrekturwerte für jede der Laststufen speichert.

## Claims

1. A motor vehicle heating device (1) which is independent of the engine, with a means (24) for the measured feeding of fuel to a burner (8) to which combustion air is delivered by a blower (11) driven by an electric motor (10), with a means (14; 21) of varying the combustion air and/or fuel quantity as well as a control device (18) comprising a non-volatile data storage means (22) and a microprocessor (19), characterised in that it is possible via an input (26, 20) to feed to the control device (18) a correction value which is stored in the data storage means (22) and alter output signals from the control device (18) to the means (24) of feeding fuel and/or to the combustion air blower (11) to determine their respective rotary speed or cyclic frequency.

2. A motor vehicle heating device (1) which is independent of the engine, according to Claim 1, characterised in that the correction value is input into the data storage means (22) via a serial interface (20).

3. A motor vehicle heating device (1) which is independent of the engine, according to one of the preceding Claims, characterised in that the correction value can be adjusted by means of a potentiometer (21), detected by means of an analogue/digital converter (23) and input into the data storage means (22).

4. A motor vehicle heating device (1) which is independent of the engine, according to Claim 3, characterised in that the analogue/digital converter (23) is integrated into the microprocessor (19).

5. A motor vehicle heating device (1) which is independent of the engine, according to Claim 3 or 4, characterised in that the potentiometer (21) is disposed on a circuit board (15) of the control device (18).

6. A motor vehicle heating device (1) which is independent of the engine, according to Claim 2, characterised in that the serial interface (20) can be used for read-out of operating parameters by means of a diagnostic unit.

7. A motor vehicle heating device (1) which is independent of the engine, according to Claim 6, characterised in that the correction value is input by means of the diagnostic unit.

8. A motor vehicle heating device (1) which is independent of the engine, according to one of the preceding Claims, which is adapted to be operated in a plurality of load stages, characterised in that the data storage means (22) stores correction values which are specific to each of the load stages.

## Revendications

1. Appareil de chauffage de véhicule indépendant du moteur, comprenant une installation (24) pour l'alimentation dosée en combustible d'un brûleur (8) recevant l'air comburant par un ventilateur (11) entraîné par un moteur électrique (10), une installation (14, 21) pour modifier la quantité air et/ou carburant, ainsi qu'un appareil de commande (18) comprenant une mémoire morte (22) et un microprocesseur (19),
caractérisé en ce que
l'appareil de commande (18) reçoit, par au moins une entrée (26, 20), une valeur de correction qui est enregistrée dans une mémoire de donnée (22) et modifie les signaux de sortie de l'appareil de commande (18) destiné à l'installation (24) fournissant le carburant et/ou au ventilateur (11) de l'air comburant pour en modifier la vitesse de rotation ou la fréquence de fonctionnement.

2. Appareil de chauffage de véhicule (1) indépendant du moteur, selon la revendication 1,
caractérisé en ce que
la valeur de correction est enregistrée dans la mémoire de donnée (22) par une interface série (20).

3. Appareil de chauffage de véhicule (1) indépendant du moteur, selon l'une quelconque des revendications précédentes,
caractérisé en ce que
la valeur de correction est réglable à l'aide d'un potentiomètre (21), cette valeur est transmise par un convertisseur analogique/numérique (23) pour être enregistrée dans la mémoire de donnée (22).

4. Appareil de chauffage de véhicule (1) indépendant du moteur, selon la revendication 3,
caractérisé en ce que
le convertisseur analogique/numérique (23) est intégré au microprocesseur (19).

5. Appareil de chauffage de véhicule (1) indépendant du moteur, selon l'une des revendications 3 ou 4,
caractérisé en ce que
le potentiomètre (21) est monté sur une platine (15) de l'appareil de commande (18).

6. Appareil de chauffage de véhicule (1) indépendant du moteur, selon la revendication 2,
caractérisé en ce que
l'interface série (20) est applicable à la lecture des paramètres de fonctionnement par l'intermédiaire d'un appareil de diagnostic.

7. Appareil de chauffage de véhicule (1) indépendant du moteur, selon la revendication 6,
caractérisé en ce que
l'introduction de la valeur de correction se fait à l'aide d'un appareil de diagnostic.

8. Appareil de chauffage de véhicule (1) indépendant du moteur, selon l'une des revendications précédentes, cet appareil fonctionnant à plusieurs niveaux de charge,
caractérisé en ce que
la mémoire de donnée (22) contient des valeurs de correction spécifiques pour chaque niveau de charge.
